# EUROPÄISCHE PATENTANMELDUNG

(11) **EP 1 748 218 A1**
(43) Veröffentlichungstag der Anmeldung: **31.01.2007**
(21) Anmeldenummer: 06013560.5
(22) Anmeldetag: 30.06.2006
(51) Int. Cl.: F16F 9/32, B60G 15/06

(54) **Schwingungsdämpfer mit angeschweissten Befestigungselementen**

(30) Priorität: 29.07.2005 DE 102005035569
(71) Anmelder: ThyssenKrupp Bilstein Suspension GmbH, 58256 Ennepetal (DE)
(72) Erfinder: Wiegand, Friederich, Dipl.-Ing., 54290 Trier (DE); Justinger, Gerhard,Dipl-.Ing., 54429 Mandern (DE)
(74) Vertreter: Adams, Steffen

(57) **Zusammenfassung**

Die Erfindung betrifft einen Schwingungsdämpfer mit einem zylindrischen Dämpferrohr (1) und mindestens einem Anbauteil (2), das mit dem Dämpferrohr (1) unmittelbar durch Kondensatorentladungsschweißen verbunden ist. Um zu erreichen, dass beliebig geformte Anbauteile (2) insbesondere mit dem Dämpferrohr (1) eines Einrohrdämpfers stoffschlüssig durch Kondensatorentladungsschweißen verbunden werden können, wird vorgeschlagen, dass das Anbauteil (2) mindestens zwei das Dämpferrohr (1) zumindest teilweise umgebende Befestigungslaschen (3) aufweist, wobei jede Befestigungslasche (3) an ihrer dem Dämpferrohr (1) zugewandten Fläche (4) einen Schweißbuckel (5) aufweist, der mit dem Dämpferrohr (1) stoffschlüssig verbunden ist.

## Beschreibung

Die Erfindung betrifft einen Schwingungsdämpfer mit einem zylindrischen Dämpferrohr und mindestens einem Anbauteil, das mit dem Dämpferrohr unmittelbar durch Kondensatorentladungsschweißen verbunden ist.

Bei Federbeinen für Kraftfahrzeuge ist es erforderlich, an das Dämpferrohr eines Schwingungsdämpfers Anbauteile anzubringen, wie beispielsweise einen Federteller, auf dem sich die den Schwingungsdämpfer zumindest teilweise umgebende Fahrzeugfeder abstützen kann. Insbesondere bei Einrohrdämpfern ist das Befestigen der Anbauteile an dem Dämpferrohr des Schwingungsdämpfers nicht unkritisch, weil die Innenwandung des Dämpferrohres bei Einrohr-Stoßdämpfern die mit dem Arbeitskolben des Schwingungsdämpfers zusammenwirkende Führungsfläche bildet. Die Verbindung des Anbauteils mit dem Dämpferrohr des Schwingungsdämpfers muss daher in jedem Fall so erfolgen, dass keine Verformungen oder sonstigen Beeinträchtigungen der Innenfläche des Dämpferrohres auftreten.

Aus der DE 32 30 936 A1 ist ein Einrohr-Stoßdämpfer bekannt, bei dem die Federtelleraufnahme mittels Schweißen mit dem Stoßdämpferrohr verbunden ist. Bei dem aus dieser Schrift bekannten Einrohr-Stoßdämpfer ist vorgesehen, dass die Verbindung mittels Punktschweißen oder dergleichen ausgeführt wird. Nachteilig ist hierbei, dass durch diese Fügeverfahren die hohen Anforderungen an Rundheit und Linearität der Innenfläche des Dämpferrohres nicht erfüllt werden. Normales Schweißen, wie beispielsweise Punktschweißen, führt zu unakzeptabel hohen Verzügen, sodass ohne eine zusätzliche Nachbearbeitung des Innendurchmessers des Dämpferrohres keine akzeptable Qualität im Hinblick auf Rundheit und Linearität der Innenfläche erreicht werden kann.

Um die vorgenannten Nachteile zu vermeiden, ist vorgeschlagen worden, Anbauteile, wie beispielsweise Federteller, mittels Laserstrahlschweißen direkt an das Dämpferrohr des Schwingungsdämpfers anzuschweißen. Dabei muss sichergestellt werden, dass die Einbrandtiefe der Schweißung im Dämpferrohr des Schwingungsdämpfers maximal das 0,8-fache der Wanddicke des Dämpferrohres beträgt (DE 41 22 798 C2). Die Anforderungen an die Regelungstechnik im Hinblick auf diesen Schweißprozess sind vergleichsweise hoch.

Aus der DE 195 06 699 A1 ist es bekannt, den Boden eines Federtellers mittels Kondensatorentladungsschweißen stoffschlüssig mit dem Dämpferrohr eines Schwingungsdämpfers zu verbinden. Dabei ist ein kreisförmiger Teilbereich des Bodens im Inneren des zylindrischen Dämpferrohres angeordnet und der Außendurchmesser des Bodens ist größer als der Außendurchmesser des Dämpferrohres. Nachteilig an dieser Lösung ist, dass der Federteller nur am Ende des Dämpferrohres angeschweißt werden kann, nicht dagegen in einem axial von dem Ende des Dämpferrohres beabstandeten Bereich.

Schließlich ist aus der DE 101 63 218 A1 ein Stoßdämpfer für eine Kraftfahrzeug-Radaufhängung bekannt, bei dem ein Anbauteil z.B. mittels Kondensatorentladungsschweißen an das Dämpferrohr des Stoßdämpfers angeschweißt ist. Der Stoßdämpfer kann dabei als Zweirohr-Stoßdämpfer oder auch als Einrohrdämpfer ausgebildet sein. Das Befestigungsteil, das bei der DE 101 63 218 A1 mit dem Dämpferrohr des Stoßdämpfers stoffschlüssig durch Kondensatorentladungsschweißen verbunden wird, ist als Lasche mit einer im Wesentlichen rechteckigen Grundform ausgebildet und diese Lasche ist mit ihrer dem Dämpferrohr zugewandten Seitenkante mit diesem stoffschlüssig verbunden. Dabei kann die Seitenkante entweder durchgehend mit dem Dämpferrohr verbunden sein oder es kann an der Seitenkante an ihrem oberen und unteren Ende jeweils ein Befestigungsfuß ausgebildet sein, der an das Dämpferrohr angeschweißt ist.

Bei der aus der DE 101 63 218 A1 bekannten Lösung ist von Nachteil, dass sich das darin beschriebene Befestigungsverfahren nur für bestimmte Anbauteile eignet, die die in der DE 101 63 218 A1 beschriebene Form aufweisen. Das aus der DE 101 63 218 A1 bekannte Verfahren ist nicht geeignet für beliebige Anbauteile, insbesondere ist es nicht geeignet für Federteller oder ähnliche Anbauteile, die einen zylindrischen Bereich aufweisen, der das Dämpferrohr des Schwingungsdämpfers ganz oder teilweise umgibt.

Der Erfindung liegt die Aufgabe zugrunde, einen Schwingungsdämpfer der eingangs genannten Art zur Verfügung zu stellen, bei dem das Anbauteil beliebig geformt sein kann und beliebige funktionale Aufgaben erfüllen kann.

Der Erfindung liegt außerdem die Aufgabe zugrunde, ein Verfahren zum Herstellen eines Schwingungsdämpfers mit einem zylindrischen Dämpferrohr und mindestens einem Anbauteil, das mit dem Dämpferrohr unmittelbar durch Kondensatorentladungsschweißen verbunden ist, anzugeben, mit dem beliebig geformte und unterschiedlichste funktionale Aufgaben übernehmende Anbauteile am Dämpferrohr eines Schwingungsdämpfers, insbesondere eines Einrohrdämpfers, angeschweißt werden können, ohne dass die Rundheit und Linearität der Innenfläche des Dämpferrohres negativ beeinträchtigt werden.

Hinsichtlich des Schwingungsdämpfers wird die genannte Aufgabe durch einen Schwingungsdämpfer mit den Merkmalen des Anspruchs 1 gelöst. Vorteilhafte Weiterbildungen des Schwingungsdämpfers sind in den Unteransprüchen 2 und 3 angegeben.

Im Hinblick auf das Verfahren wird die vorgenannte Aufgabenstellung durch ein Verfahren mit den Merkmalen des Anspruchs 4 gelöst. Vorteilhafte Weiterbildungen des erfindungsgemäßen Verfahrens sind in den Unteransprüchen 5 bis 10 angegeben.

Bei der Erfindung wird eine sichere stoffschlüssige Verbindung des Anbauteils mit dem Dämpferrohr des Schwingungsdämpfers durch Kondensatorentladungsschweißen dadurch erreicht, dass das Anbauteil mindestens zwei Befestigungslaschen aufweist, die das Dämpferrohr des Schwingungsdämpfers zumindest teilweise umgeben, wobei jede Befestigungslasche an ihrer dem Dämpferrohr zugewandten Fläche einen Schweißbuckel aufweist, der mit dem Dämpferrohr stoffschlüssig verbunden ist. Auf diese Weise wird eine sichere und eine ausreichende Dauerfestigkeit aufweisende stoffschlüssige Verbindung zwischen dem Dämpferrohr des Schwingungsdämpfers und dem Anbauteil gewährleistet, ohne dass es zu negativen Beeinträchtigungen der Innenfläche des Dämpferrohres kommt. Dadurch können die Anbauteile insbesondere bei Einrohrdämpfern unmittelbar mit dem Dämpferrohr des Schwingungsdämpfers stoffschlüssig verbunden werden.

Da die Befestigungslaschen fest mit dem Anbauteil verbunden sind, wird eine funktionale Entkopplung des Befestigungsbereiches des Anbauteiles mit dessen Funktionsbereich erreicht. So kann das Anbauteil beispielsweise als Federteller ausgebildet sein, bei dem ein das Dämpferrohr zumindest teilweise umgebender Befestigungsbereich vorhanden ist, der die Befestigungslaschen aufweist, während der eigentliche Federteller, an dem sich die Fahrzeugfeder abstützt, beabstandet zum Befestigungsbereich angeordnet und von diesem vollständig entkoppelt ist. Aufgrund dieser Entkopplung von Funktionsbereich und Befestigungsbereich des Anbauteils ist es möglich, unterschiedlichste Anbauteile mit unterschiedlichen funktionalen Aufgaben mit dem Dämpferrohr des Schwingungsdämpfers stoffschlüssig zu verbinden.

Eine besonders sichere und dauerfeste Befestigung des Anbauteils an dem Dämpferrohr wird erreicht, wenn mehrere Befestigungslaschen an dem Anbauteil ausgebildet sind, wobei die Befestigungslaschen gleichmäßig über den Umfang des Dämpferrohres verteilt angeordnet sind. Wenn das Anbauteil ein Federteller ist, dann sind bevorzugt drei Befestigungslaschen über den Umfang verteilt angeordnet. Bei anderen Anbauteilen wie z.B. Stabilisatorhaltern, Bremsschlauchhaltern und ähnlichem können auch zwei Befestigungslaschen ausreichen.

Im Folgenden wird die Erfindung anhand einer ein Ausführungsbeispiel zeigenden Zeichnung näher erläutert. Im Einzelnen zeigen
- Fig. 1: ein Anbauteil mit Befestigungslaschen im Axialschnitt in Seitenansicht;
- Fig. 2: ein mit dem Dämpferrohr eines Schwingungsdämpfers verbundenes Anbauteil.

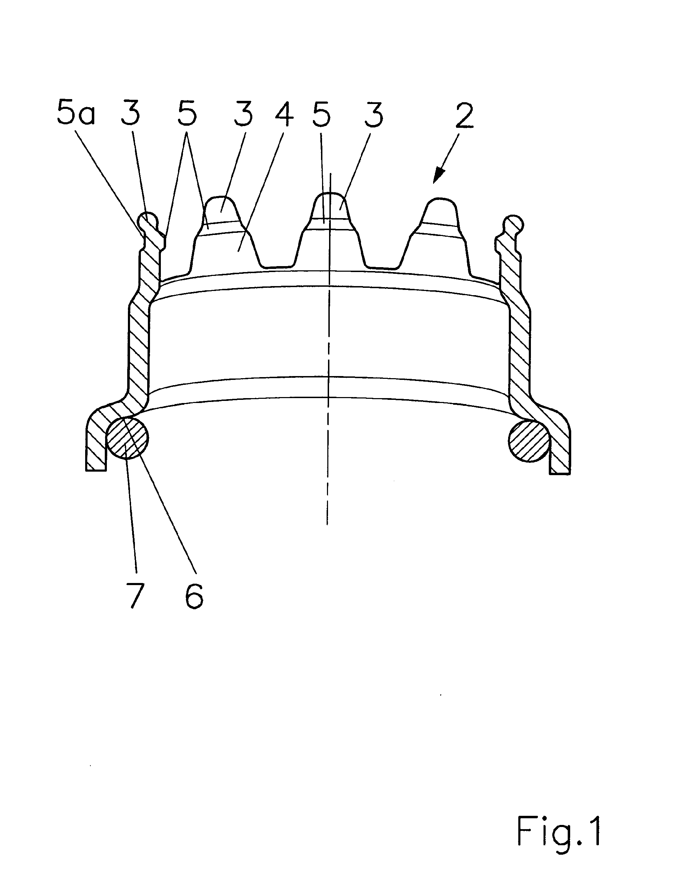

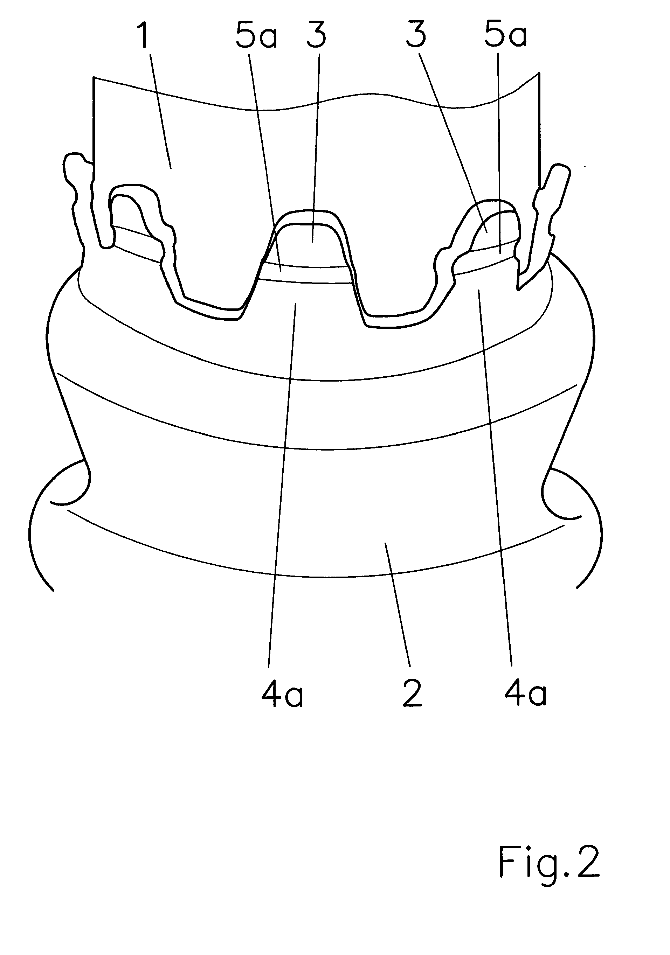

In Fig. 1 ist ein als Federteller ausgebildetes Anbauteil 2 schematisch dargestellt. Angedeutet ist eine Stützfläche 6, auf der sich eine ebenfalls angedeutete Fahrzeugfeder 7 abstützen kann. In axialer Richtung beabstandet von der Stützfläche 6 ist der Befestigungsbereich des Anbauteiles angeordnet. In diesem Befestigungsbereich sind Befestigungslaschen 3 an dem Anbauteil 2 ausgebildet, welche im Montagezustand das Dämpferrohr 1 des Schwingungsdämpfers teilweise umgeben (vgl. Fig. 2).

In die Befestigungslaschen 3 sind Einformungen 5a eingebracht, sodass auf der dem Dämpferrohr 1 des Schwingungsdämpfers zugewandten Fläche 4 der Befestigungslaschen 3 Schweißbuckel 5 ausgebildet sind. Nach der Verschweißung besteht zwischen dem Anbauteil 2 und dem Dämpferrohr 1 im Bereich der Schweißbuckel 5 eine stoffschlüssige Verbindung.

In Fig. 2 ist die Anordnung von Dämpferrohr 1 und Anbauteil 2 nach dem Verschweißen schematisch dargestellt. Es ist gut zu erkennen, dass die einzelnen Befestigungslaschen 3 gleichmäßig über den Umfang des Dämpferrohres 1 angeordnet sind. Ebenfalls gut zu erkennen sind die Einformungen 5a, die in die Außenflächen 4a der Befestigungslaschen 3 eingeformt sind. Durch diese Einformungen 5a bilden sich auf der der Außenfläche 4a gegenüber liegenden innere Fläche 4 der Befestigungslaschen 3 die für die Verschweißung benötigten Schweißbuckel 5 aus.

Das Verfahren zum Herstellen eines Schwingungsdämpfers gemäß der Erfindung wird im Folgenden beschrieben:
Zunächst wird an einem Anbauteil 2, z.B. einem Federteller, ein Befestigungsbereich dadurch geschaffen, dass Befestigungslaschen 3 ausgebildet werden, die mit dem Anbauteil fest verbunden sind. Es können zwei oder mehrere Befestigungslaschen 3 an dem Anbauteil vorgesehen sein. In der Schweißposition umgeben die Befestigungslaschen 3 das Dämpferrohr 1 des Schwingungsdämpfers zumindest teilweise. An den Befestigungslaschen 3 sind Schweißbuckel 5 ausgebildet, die auf der Fläche 4 der Befestigungslaschen angeordnet sind, welche in der Schweißposition dem Dämpferrohr 1 zugewandt ist.

Der von den Befestigungslaschen 3 eingeschlossene Durchmesser ist vor der Montage mit dem Dämpferrohr 1 gegenüber dem äußeren Durchmesser des Dämpferrohrs 1 etwas aufgeweitet, sodass das Dämpferrohr 1 des Schwingungsdämpfers problemlos durch die Befestigungslaschen 3 hindurchgesteckt werden kann, ohne dass die Befestigungslaschen 3 am Dämpferrohr 1 anliegen. Nachdem das Anbauteil 2 mit den Befestigungslaschen 3 relativ zum Dämpferrohr 1 in der Schweißposition positioniert worden ist, werden sowohl das Anbauteil 2 als auch das Dämpferrohr 1 des Schwingungsdämpfers mit entsprechenden Kontaktschalen (nicht dargestellt) an die Stromzufuhr der Kondensatorentladungsschweißanlage angeklemmt.

Anschließend werden die Befestigungslaschen 3 mittels hydraulischen Zylindern an das Dämpferrohr 1 angepresst. Die Anpresskraft beträgt hierbei etwa 5000 N. Es versteht sich, dass die Anpresskraft auch mit pneumatischen Mitteln oder mit Kraftspeichern (Federkraft) erzeugt werden kann. Die Höhe der Anpresskraft und die für das Schweißen benötigte Energie ist natürlich abhängig von der Geometrie der Bauteile und deren Werkstoffen.

Anschließend wird ein sehr starker und sehr kurzer Stromimpuls durch die beiden Bauteile (Anbauteil 2 und Dämpferrohr 1) geleitet. Die Energie zur Erzeugung dieses Stromimpulses beträgt ca. 20 kJ.

Aufgrund des Stromimpulses verschmelzen die Schweißbuckel 5 der Befestigungslaschen 3 mit dem Material des Dämpferrohres 1. Gleichzeitig werden die Schweißbuckel 5 schlagartig durch die hydraulischen Zylinder gegen das Dämpferrohr 1 gepresst. Auf diese Weise wird eine Press-Schweißverbindung zwischen dem Anbauteil 2 und dem Dämpferrohr 1 hergestellt.

### Bezugszeichenliste

1. Dämpferrohr
2. Anbauteil
3. Befestigungslasche
4. Fläche
   4a Außenfläche
5. Schweißbuckel
   5a Einformungen
6. Stützfläche
7. Fahrzeugfeder

## Patentansprüche

1. Schwingungsdämpfer mit einem zylindrischen Dämpferrohr (1) und mindestens einem Anbauteil (2), das mit dem Dämpferrohr (1) unmittelbar durch Kondensatorentladungsschweißen verbunden ist, **dadurch gekennzeichnet, dass** das Anbauteil (2) mindestens zwei das Dämpferrohr (1) zumindest teilweise umgebende Befestigungslaschen (3) aufweist, wobei jede Befestigungslasche (3) an ihrer dem Dämpferrohr (1) zugewandten Fläche (4) einen Schweißbuckel (5) aufweist, der mit dem Dämpferrohr (1) stoffschlüssig verbunden ist.

2. Schwingungsdämpfer nach Anspruch 1, **dadurch gekennzeichnet, dass** das Anbauteil (2) drei oder mehr Befestigungslaschen (3) aufweist, die gleichmäßig über den Umfang des Dämpferrohres (1) verteilt angeordnet sind.

3. Schwingungsdämpfer nach den Ansprüchen 1 bis 2, **dadurch gekennzeichnet, dass** das Anbauteil (2) als Federteller ausgebildet ist.

4. Verfahren zum Herstellen eines Schwingungsdämpfers mit einem zylindrischen Dämpferrohr (1) und mindestens einem Anbauteil (2), das mit dem Dämpferrohr (1) unmittelbar durch Kondensatorentladungsschweißen verbunden ist, **gekennzeichnet durch** folgende Verfahrensschritte:
1) Erzeugen von mindestens zwei mit dem Anbauteil (2) verbundenen Befestigungslaschen (3), die das Dämpferrohr (1) in der Schweißposition zumindest teilweise umgeben und deren in der Schweißposition dem Dämpferrohr (1) zugewandte Fläche (4) Schweißbuckel (5) aufweist;
2) Anordnen des Anbauteils (2) in der gewünschten Schweißposition relativ zum Dämpferrohr (1);
3) Anpressen der Befestigungslaschen (3) an das Dämpferrohr (1) mit einer vorgegebenen Anpresskraft;
4) Anschließen des Anbauteils (2) und des Dämpferrohrs (1) an die Stromzufuhr einer Kondensatorentladungsschweißanlage;
5) Beaufschlagen des Anbauteils (2) und des Dämpferrohrs (1) mit einem starken Stromimpuls, so dass sich eine stoffschlüssige Press-Schweißverbindung zwischen den Schweißbuckeln (5) und dem Dämpferrohr (1) ausbildet.

5. Verfahren nach Anspruch 3, **dadurch gekennzeichnet, dass** an dem Anbauteil (2) zehn Befestigungslaschen (3) ausgebildet sind, die gleichmäßig über den Umfang des Dämpferrohres (1) verteilt angeordnet sind.

6. Verfahren nach Anspruch 3 oder 4, **dadurch gekennzeichnet, dass** zunächst die Befestigungslaschen (3) erzeugt und anschließend die Schweißbuckel (5) durch Umformen der Befestigungslaschen (3) gebildet werden.

7. Verfahren nach Anspruch 3 oder 4, **dadurch gekennzeichnet, dass** die Schweißbuckel (5) gebildet werden, indem zunächst der Bereich des Anbauteils (2), in dem die Befestigungslaschen (3) ausgebildet werden sollen, vor dem Ausbilden der Befestigungslaschen (3) umgeformt wird und anschließend die Befestigungslaschen (3) erzeugt werden.

8. Verfahren nach den Ansprüchen 3 bis 6, **dadurch gekennzeichnet, dass** die Befestigungslaschen (3) mit hydraulischen Anpressmitteln wie z.B. Hydraulikzylindern an das Dämpferrohr (1) angepresst werden.
